Europäisches Patentamt

European Patent Office

Office européen des brevets

(11) Publication number: **0 288 121**
**A1**

## (12) EUROPEAN PATENT APPLICATION

(21) Application number: 88200728.9

(22) Date of filing: 14.04.88

(51) Int. Cl.4: **B29C 53/06** , **B27H 1/00**

(30) Priority: 15.04.87 NL 8700898

(43) Date of publication of application:
26.10.88 Bulletin 88/43

(84) Designated Contracting States:
BE DE FR LU NL

(71) Applicant: **PLOEG LUNTEREN B.V.**
**Mielweg 10**
**NL-6741 ZX Lunteren(NL)**

(72) Inventor: **Ploeg, Willem**
**Mielweg 4**
**NI-6741 ZX Lunteren(NL)**

(74) Representative: de Wit, Gerard Frederik, Ir. et
al
**Octrooi- en Merkenbureau De Wit B.V.**
**Breitnerlaan 146**
**NL-2596 HG Den Haag(NL)**

(54) **Method for bending a solid plate from high pressure laminate of phenol resin and plate bending by application of the method.**

(57) Method for bending a solid plate (1,4) from a high pressure laminate of phenol resin possibly with a cover layer of melamine resin, in which at one side of the plate material is removed in the form of a plurality of small cuts (2a..... 2n) separated from each other by small ribs (3a........ 3m) and that when bending at least the remaining layer (5) is heated; and plate bent by application of the method which at the inner side of the curve is provided with a plurai-ity of cuts filled with a glue (6).

FIG. 1

## Method for bending a solid plate from high pressure laminate of phenol resin and plate bent by application of the method.

The invention relates to a method for bending a solid plate from a high pressure laminate of phenol resin with possibly a cover layer from melamine resin, such as a so-called "full core high pressure plate HPL" according to the German Normalisation DIN 16926.

Bending such plates up till now has been a problem which is the more severe up to the measure in which the plate is thicker and the material harder and consequently in practice more brittle. A hard and consequently not easy scratchable surface is, however, of great advantage.

To meet these difficulties one has developed plates which can be formed after production (postforming). According to US-A-3 378 433 such plates, when having a thickness of less than 1,5 mm, can be bent with a radius of curvature of less than 25 mm by using stretchable types of kraftpaper and certain resins for the impregnation.

CA-A-1 169 750 describes a laminate, which can be post-bent by applying scoring lines in the back layer which after bending is the convex side of the bending, which scoring lines are obliquely oriented with respect to the bending direction. These scoring lines may be applied before or after setting of the laminate and may consist of cuts with a depth of the order of 0,1 to 0,2 mm, whereas the thickness of the laminate is of the order of 0,75 to 1,25 mm.

US-A-2 648 370 describes post-forming of thin plates of plastic material by providing them locally with thicker stiffening members and bending them between these members.

US-A-2 854 373 describes a post-forming method of a laminate of layers impregnated with artificial resins, in which a post-formable plate, which at one side is provided with a decorative layer and at the other side is bounded to support plates, is bent over a mould, part of which afterwards may be part of the final product. The plate itself has such a thickness and is made of such a material, that bending is possible.

CA-A-947 806 describes a plate of stiff material with a flexible cover layer, overlapping V-shaped grooves being made in the stiff material and the cover layer being bent at the base of the V-shaped grooves, the space remaining after the bending operation being filled with a melt glue.

From these citations no method is known for bending a laminate having a thickness of more than 4 mm and a great surface hardness, such as a solid plate from high pressure laminate of phenol resin possibly with a cover layer of melamine resin, such as a so-called full core high pressure plate HPL according to the German normalisation DIN 16926.

From practice a method is known in which the laminate at one side is fraised away with the exception of a thin rest layer. Afterwards this rest layer is bent when hot pressing it against a heated bending form, after which the form is removed and liquid glue is applied which replaces the removed laminate material. This method has the disadvantage that so much material has to be removed as is necessary to bend the rest layer about the bending form and to be able to remove the latter afterwards, which material removing step is rather time consuming. After this the bent plate has to be oriented with the inner curve upward, its ends closed, a liquid glue poured and the glue set. Moreover the final product contains a glue body, which often has an appearance and mechanical properties, which differ from those of the laminate.

Another method known from practice is manufacturing the laminate in bent shape. This is very expensive and has the disadvantage, that afterwards bending or deforming is impossible.

Finally a laminate is sold, which is indicated as "bending quality" and consists of a number of layers which are united by means of a bonding material which weakens at higher temperature, for instance 80° C, so that the layers can slide upon each other as the laminate is bent. This requires heating of all parts of the plate in which such a sliding movement may occur. Further the layers at their end edge often are shifted with respect to each other, whereas the possible radius of curvature still is rather great, in the order of 30 mm.

The invention aims to provide a bending method, which enables to bend in a simple and fast way relatively thick solid plates from a high pressure laminate of phenol resin with possibly a cover layer of melamine resin such as the so-called full core high pressure plate HPL according to German normalisation DIN 16926, which method allows for small radii of curvature.

This method is described in claim 1.

The success of the method is possibly due to the temperature distribution in the grooved laminate when this is heated with which the material between the ribs gets naturally a higher temperature and to the presence of ribs, which are firmly connected to and in fact are unitary with the rest layer and which serve as supports during the bending operation.

It is remarked that for quite another material with quite different properties, to wit chipboard with a glued cover layer DE-A-2 815 714 shows a bending method in which partial cuts are used. This cover layer is of flexible material and no heat is applied except for the possible application of a melted glue.

From DE-C-904 461 and DE-B-1 000 594 variations hereof are known, namely for bending a plate to a closed body and for bending chipboard with double veneer.

In contradistinction to these known methods the invention provides a solution for bending relatively thick plates from a phenol resin laminate with a relative small radius of curvature, which method moreover demands little labour and can be carried out with relatively simple apparatus in comparison to methods with which only larger radii of curvature or a less homogeneous product can be obtained.

Bending can be realized by backing up the ribs during bending with a support, for instance a bending iron.

It is not necessary that the glue is only applied before the deformation and sets at higher temperatures. It is also possible to inject the glue afterwards into the remains of the cuts, but doing so in practice normally does not yield any advantage.

The invention allows to have at mutual small distances relatively small ribs, so that a practically round shape is obtained at the outerside. If broad ribs and relative large interspaces are used the outerside obtains a prisma-like shape and one can see shimmer the ribs.

The invention also encompasses a plate which has been bent by application of the inventive method.

The above and further details of the invention will appear from the description, which is given in the following on hand of the drawing, in which:

Figure 1 shows a section through a plate with cuts applied in it; and

Figure 2 shows the same plate after bending into a shape, which is suitable for for instance wall panels of bath rooms or in hospitals, cover plates in bath rooms or kitchens and shielding plates for for instance the attachment of curtains.

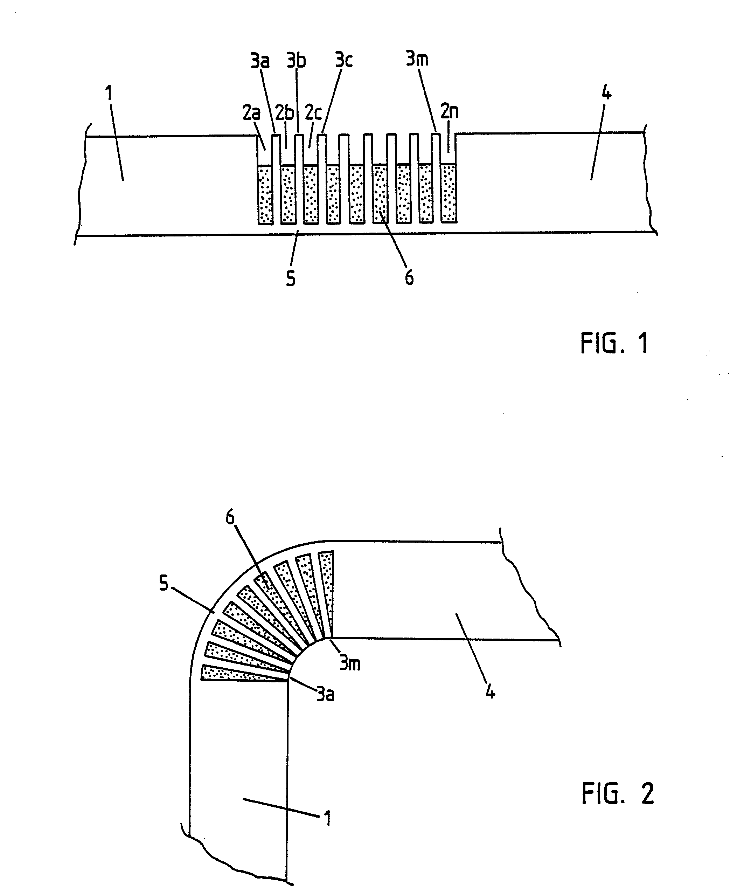

In fig. 1 the plate has a left portion 1, which is not provided with cuts, next a portion with cuts indicated with 2a, 2b, 2c .......... 2n and ribs indicated with 3a, 3b, 3c ........ 3m and a right portion 4 not provided with cuts. The cuts have a width of for instance 1,5 mm and the ribs of about 1 mm. The cuts extend to the virtual layer 5, which has a thickness of for instance 0,5 - 3 mm, but mostly of 1-2 mm, depending on the material properties and the thickness of the laminate. An outer layer of melamine resin may be present, which, depending from the thickness of the plate is about 1-2 mm thick. The cuts are partly filled with a glue, for instance a two components polyurethane or polyamide glue 6.

In fig. 2 is indicated how this plate looks like in section after the bending.

The ribs 3a - 3m engage each other at their outer ends and the cuts 2a ....... 2n are completely filled with glue, such as polyurethane or polyamide 6.

Bending of the outer layer takes place under heating and demands high care because the brittleness of this layer in practice is not only dependent from the thickness but appears to vary also with different colours and/or properties.

Further it is indicated that with bending, when applying the invention the layer 5 and the outer ends of the ribs 3a..... 3m should be supported. If one would leave only the parts 1 and 4 and the rest layer 5 it would be impossible to support the layer 5 at both sides, except with use of a support that has to be removed in a direction perpendicular to the plane of the drawing when the parts 1 and 4 have been moved toward each other. If such a support could be applied it is moreover only possible to replace the support by a filler after the support has been removed. With the invention the several bodies of glue 6 are always well bonded to the plate material, namely not only at the bottom of each cut but also along the side walls of them. This gives an exceptional firm connection between the glue and the plate, which can only difficultly or not at all be obtained, if one injects a glue or artificial resin in a large excavation.

Because during bending the glue 6 has not yet set the possibility exists by using a small excess of glue to bond with a good plane engagement the side of the curve where the cuts are present to a frame part, for instance a rectangular profile with rounded corner edges.

## Claims

1. Method for bending a solid plate (1,4) from a high pressure laminate of phenol resin possibly with a cover layer of melamine resin, such as a so-called full core high pressure plate HPL according to the German normalisation DIN 16926 with a thickness of 4 mm or more, in which at one side of the plate material is removed until at the other side a thin layer (5) remains, which is hot bended, after which any vacancy left over after bending is filled with glue (6), characterized in that the removal of material occurs in the form of a plurality of small cuts (2a ......2n) with a width of 1-2 mm and separated from each other by small ribs (3a ... 3m) with a width of 0,5-2 mm of the original material and that when bending at least the remaining layer is heated and the upper surfaces of the ribs backingly come into engagement with support elements.

2. Method according to claim 1, characterized in that heat is applied at the side away from the cuts, by reason of which the temperature below the cuts (2a .... 2n) is somewhat higher than below the ribs (3a ..... 3m).

3. Method according to claim 2, characterized in that the glue is a two components polyurethane or polyamide glue which sets during and/or immediately after the bending.

4. Method according to claim 3, characterized in that the cuts contain a little excess glue material and that a support having a shape corresponding to the bent surface of the plate is glue-bonded by the excess glue pressed out of the cuts.

5. Method according to one or more of the preceding claims, characterized in that the plate in different zones at different sides is cut in and is bent in opposite directions.

6. Plate of high pressure laminate of phenol resin possibly with a cover on base of melamine resin having a curve which at its inner side is provided with a plurality of cuts filled with a glue, the cuts (2a ....... 2n) having before bending a width of 1-2 mm and being separated from each other by ribs (3a .... 3m) having a width of 1-2 mm.

7. Plate according to claim 6, characterized in that the radius of curvature of the outer curve is less than three times the plate's thickness.

8. Plate according to claim 7, characterized in that the radius of curvature of the outer curve is less than 1,5 times the thickness of the plate.

9. Plate according to claim 6, characterized in that the thickness of the plate is 4 mm or more, that the radius of curvature of the outer curve is less than 25 mm and that the surfaces of the curve at both sides consist of original plate material and that at the inner side of the curve cuts are present, which are pinched off and filled with set glue.

10. Plate according to any of the claims 6-9, characterized in that the plate is of non-bendable quality.

3a  3b   3c        3m

2a  2b  2c        2n

1                                                 4

5           6

**FIG. 1**

6

5

3m

3a

4

1

**FIG. 2**

# EUROPEAN SEARCH REPORT

**European Patent Office**

Application Number

EP 88 20 0728

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | DE-A-2 815 714 (BZ - PLANKENHORN)<br>* Whole document * | 1-5 | B 29 C 53/06<br>B 27 H 1/00 |
| A | | 6-10 | |
| D,X | CA-A-1 169 750 (DOMTAR)<br>* Page 7, line 21; page 8, lines 1-4; page 2, lines 1-30; figures * | 1,6-8, 10 | |
| A | EP-A-0 204 890 (RESOPAL)<br>* Claims 1,9; figures * | 1-10 | |
| A | PATENT ABSTRACTS OF JAPAN, vol. 5, no. 72 (M-68)[744], 14th May 1981; & JP-A-56 21 818 (NIPPON GAKKI SEIZO K.K.) 28-02-1981<br>* Whole abstract * | 1-10 | |
| D,A | CA-A- 947 806 (SPURDLE)<br>* Figures; page 5, lines 5-19 * | 1,3,4 | |
| D,A | DE-B-1 000 594 (WERZ)<br>* Figures * | 1,6-10 | TECHNICAL FIELDS SEARCHED (Int. Cl.4) |
| D,A | US-A-3 378 433 (PALAZZOLO)<br>* Column 7, lines 52-54; column 8, lines 60-75; figures * | 1,5 | B 29 C<br>B 27 H |
| A | DE-U-8 518 938 (GOLDSCHMIDT)<br>* Figures * | 1,3,6,9 | |
| D,A | US-A-2 854 373 (BEACH)<br>* Figures * | | |
| D,A | US-A-2 648 370 (BEACH)<br>* Figures *<br>---  -/- | | |

The present search report has been drawn up for all claims

| Place of search | Date of completion of the search | Examiner |
|---|---|---|
| THE HAGUE | 01-08-1988 | CORDENIER J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | DE-C- 904 461 (SÜDOSTHOLZ)<br>* Figures, reference 5 *<br>--- | | |
| A | GB-A-1 205 560 (BUSHBOARD)<br>* Claim 4 *<br>----- | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 01-08-1988 | CORDENIER J. |

EPO FORM 1503 03.82 (P0401)